**Europäisches Patentamt**

**European Patent Office**

**Office européen des brevets**

(19)

(11) Veröffentlichungsnummer: **0 134 443**
**B1**

(12) # EUROPÄISCHE PATENTSCHRIFT

(45) Veröffentlichungstag der Patentschrift:
01.06.88

(51) Int. Cl.⁴: **H 05 B 7/14, C 21 C 5/52**

(21) Anmeldenummer: **84107294.5**

(22) Anmeldetag: **26.06.84**

(54) **Verbindung zwischen den Abschnitten einer Kohlenstoff- oder Graphitelektrode.**

(30) Priorität: 08.07.83 DE 3324692

(43) Veröffentlichungstag der Anmeldung:
20.03.85 Patentblatt 85/12

(45) Bekanntmachung des Hinweises auf die Patenterteilung:
01.06.88 Patentblatt 88/22

(84) Benannte Vertragsstaaten:
BE CH FR GB IT LI SE

(56) Entgegenhaltungen:
DE - A - 2 641 157
DE - B - 1 272 472
US - A - 4 416 014
US - A - 4 417 344

(73) Patentinhaber: **SIGRI GmbH,**
**Werner-von-Siemens-Strasse 18, D-8901 Meitingen (DE)**

(72) Erfinder: **Kraus, Günter, Dr.rer.nat., Hauptstrasse 74,**
**D-8859 Ehekirchen (DE)**
Erfinder: **Semmler, Jürgen, Dr.rer.nat.,**
**Benno-Benedicter Strasse 23, D-8850 Donauwörth (DE)**

## Beschreibung

Die Erfindung betrifft einen doppelkonischen Nippel zum Verschrauben der Abschnitte einer Kohlenstoff- oder Graphitelektrode.

Die zur Herstellung von Elektrostahl, Ferrolegierungen, Silicium und dgl. verwendeten Kohlenstoff- und Graphitelektroden – im folgenden Elektroden genannt – bestehen im allgemeinen aus mehreren miteinander verschraubten zylindrischen Teilen oder Abschnitten. Die Abschnitte sind stirnseitig mit Ausnehmungen (Schachteln) versehen, in die ein Schraubgewinde eingelassen ist. In die Schachteln sind doppelkonische, ebenfalls aus Kohlenstoff oder Graphit bestehende Gewindenippel geschraubt, die die anliegenden Elektrodenabschnitte mechanisch und elektrisch miteinander verbinden.

Die Verbindung ist beim Betrieb der Elektrode in Lichtbogenöfen mechanischen Spannungen ausgesetzt, die vor allem durch Temperaturgradienten in der Verbindungsstelle entstehen. Die mechanischen Spannungen sind offensichtlich dann am geringsten, wenn der Gewindenippel gleich tief in beiden Schachteln sitzt, d.h., das Gewindespiel über die gesamte Länge des Gewindes nahezu konstant ist. Bei einer unsymmetrischen Verschraubung kann die induzierte mechanische Spannung den Bruch der Verbindung auslösen. Es sind entsprechend zahlreiche Vorschläge zur Herstellung einer symmetrischen Nippelverbindung zwischen den Abschnitten einer Elektrode bekannt geworden. Nach der DE-AS 1 029 105 wird der Nippel bis zum Anschlag in die Schachtel des ersten Abschnittes geschraubt und soweit zurückgedreht, dass nach dem Aufschrauben des zweiten Elektrodenabschnittes die Gewinde beider Nippelhälften nur mit den der Verbindungsfläche zugekehrten Flanken an den Gewindeflanken des Gegenwindes anliegen. Da unter rauhen Betriebsbedingungen der Betrag des Zurückdrehens nicht mit ausreichender Sicherheit eingehalten wird, ist zur Herstellung einer symmetrischen Nippelverbindung vorgeschlagen worden, die Einschraubtiefe des Nippels in die Schachtel des ersten Abschnittes durch einen Anschlag etwa in Form eines verformbaren Distanzstücks zu begrenzen (z.B. DE-PS 1 061 458, DE-PS 1 272 472). Die Distanzstücke sind dabei in Ausnehmungen des Schachtelbodens eingelassen. Mit diesen Massnahmen wird jedoch ein symmetrischer Sitz des Nippels nicht oder nur zufällig erreicht, da für die Herstellung der Gewinde und für die Sicherstellung der Verschraubbarkeit eine grössere Toleranz zugelassen werden muss. Die Symmetrieebene des doppelkonischen Nippels liegt daher im allgemeinen oberhalb oder unterhalb der Berührungsfläche der Elektrodenabschnitte und das Spiel in den beiden Hälften der Verbindung wird verschieden sein. Da der Übergangswiderstand mit dem Spiel wächst und die erzeugte Joule'sche Wärme dem Übergangswiderstand proportional ist, werden die Nippelhälften unterschiedlich erhitzt und unterschiedlich grosse mechanische Spannungen in den Verbindungshälften erzeugt.

Es ist bekannt, die Symmetrieebene mit besonderen Markierungen zu versehen, mit deren Hilfe die Symmetrieebene mit den Stirnflächen der Elektrodenabschnitte zur Deckung zu bringen und den Nippel in dieser Lage zu fixieren (DE-AS 2 226 230). Die Herstellung einer symmetrischen Verschraubung ist mit diesen Mitteln jedoch verhältnismässig aufwendig und der Erfindung liegt daher die Aufgabe zugrunde, die bekannten doppelkonischen Schraubnippel derartig abzuändern, dass ohne zusätzliche Massnahmen alle Teile der Schraubverbindung thermisch-mechanisch gleich belastet sind.

Die Aufgabe wird mit einem doppelkonischen Nippel gelöst, dessen Konushälften in der Höhe verschieden sind. Bevorzugt beträgt das Höhenverhältnis 1:1,05 bis 1:3.

Der Erfindung liegt die Erkenntnis zugrunde, dass die unterschiedliche Erwärmung der Verbindungshälften – eine häufige Ursache eines Versagens der Verbindung – durch die Angleichung der Widerstände beider Verbindungshälften vermieden werden kann, ohne dass es dazu einer «Symmetrierung» der Verbindung bedarf. Der Kontakt über eine grössere Breite der im Eingriff stehenden (tragenden) Gewindeflanke oder auch über beide Gewindeflanken des ersten Elektrodenabschnittes und der zuerst eingeschraubten, «satt» anliegenden kürzeren Nippelhälfte, wird durch den längeren Eingriff des Gewindes des zweiten Elektrodenabschnittes und der zweiten, längeren Nippelhälfte ausgeglichen.

Bei der Verschraubung von zwei Elektrodenabschnitten mit einem Nippel kann man folgende Fälle unterscheiden:

1. Der Nippel wird mit kleinem Drehmoment in die erste Elektrodenschachtel geschraubt. Es besteht zwar zwischen Elektrode und Nippel zunächst Kontakt auf beiden Flanken der Gewinde, nach dem Aufschrauben der zweiten Elektrode mit dem vollen Drehmoment, das nötig ist um eine Lockerung der Verbindung zu verhindern, ist wegen der durch das Verschraubmoment erfolgten Verformung ein Kraftschluss nur noch zwischen je einer Flanke (tragende Flanke) vorhanden. Die Kontaktflächen des Gewindes der beiden Nippelhälften unterscheiden sich unter diesen Bedingungen je nach Gewindetoleranz um etwa 5 bis 20%.

2. Der Nippel wird mit dem vollen Drehmoment in die erste Elektrodenschachtel eingeschraubt. Der dadurch in der ersten Schachtel zwischen beiden Gewindeflanken hergestellte Kontakt bleibt nach dem Aufschrauben des zweiten Elektrodenabschnittes fast vollständig erhalten, da der Werkstoff durch das Aufziehen des zweiten Elektrodenabschnittes nicht mehr verformt wird. In der zweiten Elektrodenschachtel ist der Kontakt auf je eine Gewindehälfte von Elektrode und Nippel beschränkt und ist somit nur etwa halb so gross wie in der ersten Schachtel.

Die unterschiedliche Grösse der Kontaktfläche in den beiden Hälften der Verschraubung ist die Ursache für die unterschiedlichen Übergangswiderstände. In dem zuletzt verschraubten Teil der Verbindung zwischen den Elektrodenabschnitten wird entsprechend beim Betrieb der Elektrode mehr Joule'sche Wärme erzeugt als in dem zuerst verschraubten Teil. Erfindungsgemäss wird dieser Effekt durch die Verwendung eines Schraubnippels vermieden, dessen beide Hälften verschieden lang sind.

Die Höhen oder Längen der Nippelhälften sind dabei zweckmässig je nach der Verschraubungsart um 5 bis 50%, bevorzugt um 10 bis 30% für den ersten Fall und um 50 bis 300%, bevorzugt 50 bis 100% für den zweiten Fall länger, wobei die zuletzt eingeschraubte Nippelhälfte die grösste Länge hat. Für die Verbindung von Elektrodenabschnitte mit einem Durchmesser von 500 bis 600 mm, die nach der ersten Verschraubungsart verschraubt sind, eignet sich beispielsweise ein doppelkonischer Nippel, dessen Hälften 355,6 und 457,2 mm lang sind.

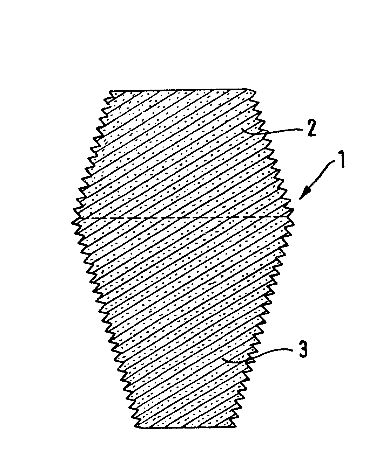

Schematisch ist der Nippel in Fig. 1 dargestellt. Der Schraubnippel 1 besteht aus der kurzen Konushälfte 2 und der langen Nonushälfte 3.

### Patentansprüche

1. Doppelkonischer Nippel zum Verschrauben der Abschnitte einer Kohlenstoff- oder Graphitelektrode, dadurch gekennzeichnet, dass die Konushälften des Nippels in der Höhe verschieden sind.

2. Doppelkonischer Nippel nach Patentanspruch 1, dadurch gekennzeichnet, dass das Höhenverhältnis 1:1,05 bis 1:3 beträgt.

3. Verwendung eines doppelkonischen Nippels nach den Patentansprüchen 1 und 2 zum Verschrauben der Abschnitte einer Kohlenstoff- oder Graphitelektrode, dadurch gekennzeichnet, dass zunächst die Konushälfte mit der kleineren Höhe mit einem ersten Elektrodenabschnitt verschraubt und dann ein zweiter Elektrodenabschnitt auf die längere Konushälfte aufgezogen wird.

### Claims

1. Threaded double conical nipple for coupling of the section of a carbon or graphite electrode characterised in that the cone halves of the nipple are of different height.

2. Double conical nipple according to claim 1, characterised in that the height ratio amounts to 1:1,05 to 1:3.

3. Use of a double conical nipple according to claims 1 to 2, for coupling of the sections of a carbon or graphite electrode, characterised in that initially the cone half with the smaller height is screw coupled with a first electrode section and then a second electrode section is screwed onto the longer cone half.

### Revendications

1. Raccord fileté doublement conique pour visser les sections d'une électrode en carbone ou en graphite, caractérisé en ce que les moitiés coniques du raccord sont de hauteurs différentes.

2. Raccord fileté doublement conique suivant la revendication 1, caractérisé en ce que le rapport entre les hauteurs se monte entre 1:1,05 à 1:3.

3. Utilisation d'un raccord fileté doublement conique suivant les revendications 1 et 2, destiné au vissage des sections d'une électrode en carbone ou en graphite, caractérisée en ce que l'on visse d'abord la moitié conique dont la hauteur est la plus petite avec une première section de l'électrode, et qu'ensuite, une seconde section d'électrode est serrée sur la moitié conique la plus longue.